# EUROPÄISCHE PATENTANMELDUNG

(11) **EP 3 617 047 A1**
(43) Veröffentlichungstag der Anmeldung: **04.03.2020**
(21) Anmeldenummer: 18020417.4
(22) Anmeldetag: 28.08.2018
(51) Int. Cl.: B62J 1/00, B62J 1/10, B62J 1/26

(54) **ZWEIRADSATTEL, IN LÄNGE UND BREITE VERSTELLBAR**

(71) Anmelder: Lindemann, Stefan, 9490 Vaduz (LI)
(72) Erfinder: Lindemann, Stefan, 9490 Vaduz (LI)

(57) **Zusammenfassung**

Der Zweiradsattel umfasst einen Sattelkörper (10), der aus einer Sattelschale (11) mit Sattelflanken (16), einer darüberliegenden Sattelpolsterung (12) die Luftkissen mit Ventil enthält, einer Satteldecke (13), einem Sitzbereich, einem Sattelnasenbereich, einer Sattelmontageschiene (18) mit Einrast-Längenverstellmechanik, die mit der Sattelschale (11) verbunden ist, einem Dreh-Rastmechanismus (19) mit Verbindung (20) zum Sattelkörper (10) besteht. Über die Luftkissen kann der Druck eingestellt werden, mit den Dreh-Rastmechanismus (19) kann die Breite der Sattelsitzfläche und mit der Einrast-Längenverstellmechanik die Sattellänge auch während der Fahrt verstellt werden was zu verschiedenen Sattelbreiten, -härten, -längen führt und folglich zu unterschiedlichen Druck- und Auflagepunkte am Gesäss und somit zu weniger Schmerzen und mehr Komfort führt.

## Beschreibung

Die vorliegende Erfindung betrifft einen Zweiradsattel und insbesondere dessen Verstellbarkeit und Trimmbarkeit.

Konventionelle Zweiradsattel bestehen aus einem Sattelkörper (10), der aus einer Sattelschale (11), einer darüberliegenden Sattelpolsterung (12), einer Satteldecke (13), einem Sitzbereich (14) und einem Sattelnasenbereich (15) besteht. Herkömmliche Zweiradsattel weisen bis anhin in der Regel eine harte Sattelschale (11) auf, welche fest, formstabil, nicht verstellbar ausgeführt wird. Dabei existieren diverse unterschiedliche Formen und Polsterungen. Den bekannten Ausführungen ist gemeinsam, dass die Breite der Sitzfläche und die Sattellänge fixiert und stabil ist und höchsten durch die Gewichtsbelastung passiv verformt werden können. Die Sattelpolsterung (12) kann aus Schaumstoff oder Gel bestehen, unterschiedliche Härtegrade ausweisen. Diesen Sattelpolsterungen ist jedoch gemeinsam, dass die einmal gewählte Härte nicht verändert werden kann.

Bei derartigen Zweiradsätteln besteht das Problem, dass der Fahrer bei der einmal gewählten Sattelform, Sattelausführung und Sattelpolsterung ständig die gleiche Belastung am Gesäss und den Sitzknochen verspürt, da der Sattel als Einheit stabil, fixiert und insbesondere während der Fahrt unveränderbar ist. Bei Dauerbelastungen können dadurch enorme Schmerzen, Schädigungen an Haut, Gewebe und Muskel auftreten. Die Ursache liegt im stabilen Sattel, dem Gewicht des Fahrers, welches auf einer kleinen, konstanten Fläche am Sattel abgestützt ist und somit zu einer konstant enorm hohen lokalen Belastung an den Gesässknochen führt. Unter den Auswirkungen wie Dauerschmerzungen, Hautrötungen, Blasenbildungen, Schwellungen, Gelenkschmerzen, Taubheit und Muskel- sowie Gewebeverhärtungen leiden allzu viele Zweiradfahrer.

Mit der vorliegenden Erfindung soll ein Zweiradsattel und insbesondere ein während der Fahrt verstellbarer, trimmbarer Zweiradsattel bereitgestellt werden, der dem Radfahrer schmerzfreies Fahren ermöglichen und höchsten Komfortansprüchen genügen soll.

Gemäss der vorliegenden Erfindung wird ein Zweiradsattel bereitgestellt, der Folgendes umfasst: einen Sattelkörper (10), der aus einer Sattelschale (11) mit Sattelflanken (16), einer darüberliegenden Sattelpolsterung (12) die Luftkissen (21) mit Ventil (17) enthält, einer Satteldecke (13), einem Sitzbereich (14), einem Sattelnasenbereich (15), einer Sattelmontageschiene (18) mit Einrast-Längenverstellmechanik (22), die mit der Sattelschale (11) verbunden ist, einem Dreh-Rastmechanismus (19) mit Verbindung (20) zum Sattelkörper (10) besteht.

Von Vorteil ist, dass über den Luftdruck der Luftkissen die Härte der Sattelpolsterung und zusätzlich mittels des Dreh-Rastmechanismus während der Fahrt, ohne zusätzliches Werkzeug, die Breite der Sitzfläche, mittels der Einrast-Längenverstellmechanik die Länge des Sattelnasenbereichs flexibel eingestellt, verändert, getrimmt und angepasst werden kann, was folglich zu unterschiedlichen Druckbelastungen und Auflagepunkten am Gesäss führt, gleichbleibende, einseitige Belastungen verhindert und somit weniger Schmerzen und höheren Komfort bietet.

Weitere Vorteile der vorliegenden Erfindung sind aus der detaillierten Beschreibung und den Zeichnungen ersichtlich.

Beschreibungen der Zeichnungen:
Fig. 1 ist eine Rückansicht (in Fahrtrichtung) des Zweiradsattels mit breiter Sitzfläche und entspanntem Dreh-Rastmechanismus gemäss der bevorzugten Ausführungsform der vorliegenden Erfindung.
Fig. 2 ist eine Rückansicht (in Fahrtrichtung) des Zweiradsattels mit schmaler Sitzfläche und gespanntem Dreh-Rastmechanismus gemäss der bevorzugten Ausführungsform der vorliegenden Erfindung.
Fig. 3 ist eine Ansicht von oben des Zweiradsattels mit breiter Sitzfläche und entspanntem Dreh-Rastmechanismus.
Fig. 4 ist eine Ansicht von oben des Zweiradsattels mit schmaler Sitzfläche und gespanntem Dreh-Rastmechanismus.
Fig. 5 ist eine Seitenansicht des Zweiradsattels mit breiter Sitzfläche und entspanntem Dreh-Rastmechanismus.
Fig. 6 ist eine Seitenansicht des Zweiradsattels mit schmaler Sitzfläche und gespanntem Dreh-Rastmechanismus.
Fig. 7 ist eine Seitenansicht des Zweiradsattels mit breiter Sitzfläche, entspanntem Dreh-Rastmechanismus und ausgefahrener Längenverstellmechanik.
Fig. 8 ist eine Seitenansicht des Zweiradsattels mit breiter Sitzfläche, entspanntem Dreh-Rastmechanismus und eingeschobener Längenverstellmechanik.

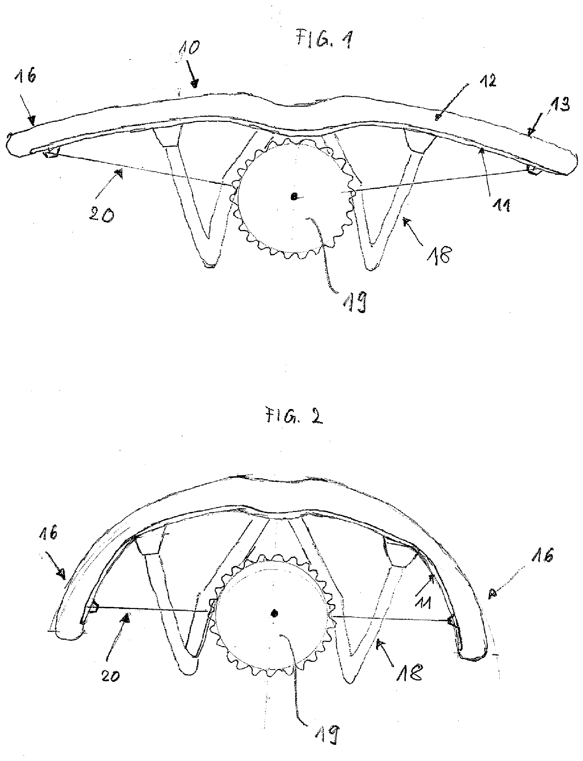

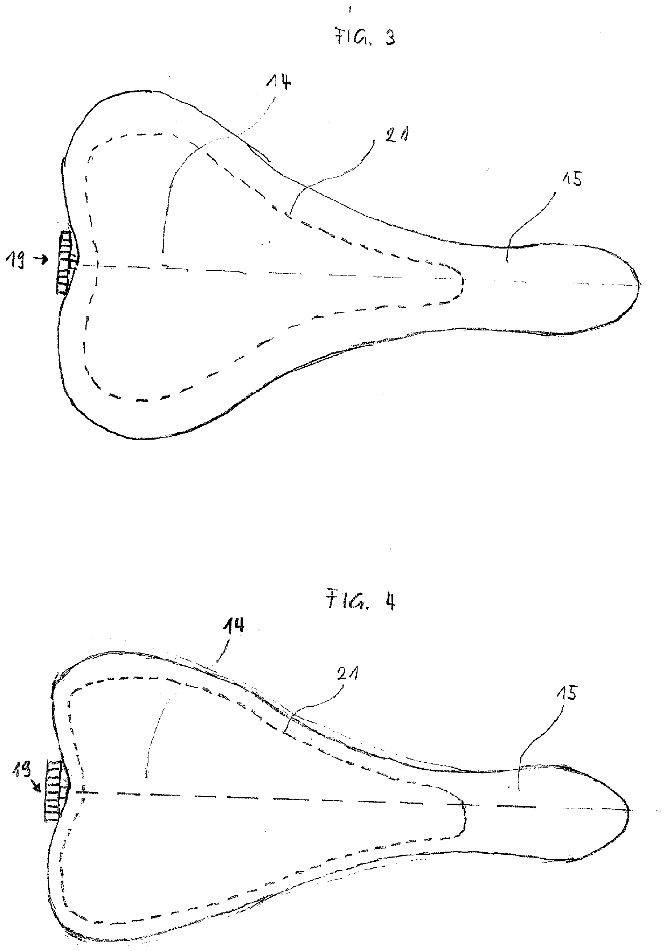

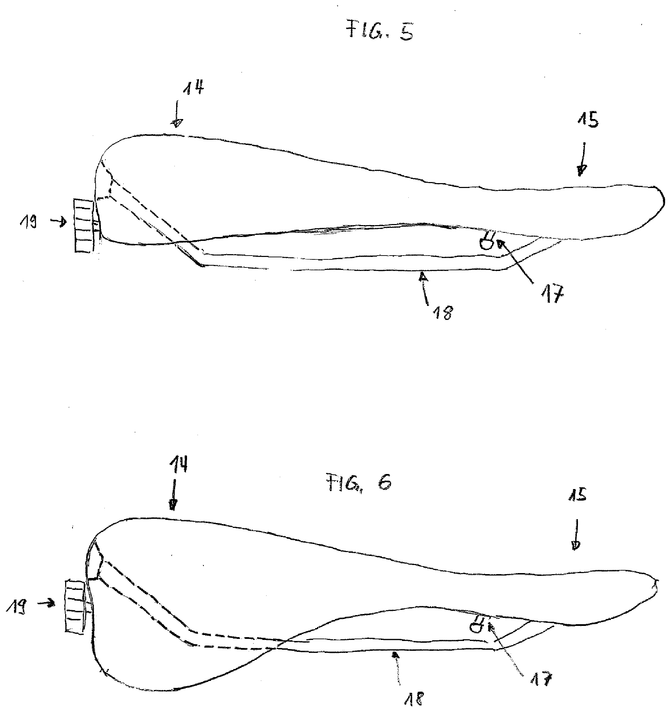

Im Folgenden wird auf die Zeichnungen und zunächst auf Fig. 1 - 6 Bezug genommen. Demnach umfasst ein Zweiradsattel gemäss der bevorzugten Ausführungsform der vorliegenden Erfindung einen Sattelkörper (10), der aus einer Sattelschale (11) mit Sattelflanken (16), einer Sattelmontageschiene (18), einer darüberliegenden Sattelpolsterung (12) die Luftkissen (21), welche aus einem Stück oder aus Teilstücken besteht, mit Ventil (17), über das mit einer Fahrradpumpe der Druck eingestellt werden kann, enthält, einer Satteldecke (13) als äussere Schutzschicht gegen Wasser und Abrieb, einem Sitzbereich (14), der in der Breite und / oder in der Krümmung über den Dreh-Rastmechanismus (19), mit einer Verbindung (20) zum Sattelkörper (10) oder Sattelschale (11) oder Sattelflanken, insbesondere während der Fahrt verstellt werden kann.

Dabei kann der Dreh-Rastmechanismus (19) über ein Drehrad oder einen Drehhebel mit Rasten- und Einrastfunktion, über welchen durch wiederholte, sektorweise Betätigung einer Teildrehbewegung die Breite der Sattelsitzfläche (14) verstellt werden kann, bedient werden. Von Vorteil ist, dass die Einstellung und Trimmung des Sattels während der Fahrt und ohne zusätzliches Werkzeug erfolgen kann.

Dabei hängt die Wahl, ob Drehrad oder Drehhebel, von der Stärke und Vorspannung der Sattelschale (11) und des Sattelkörpers (10) ab.

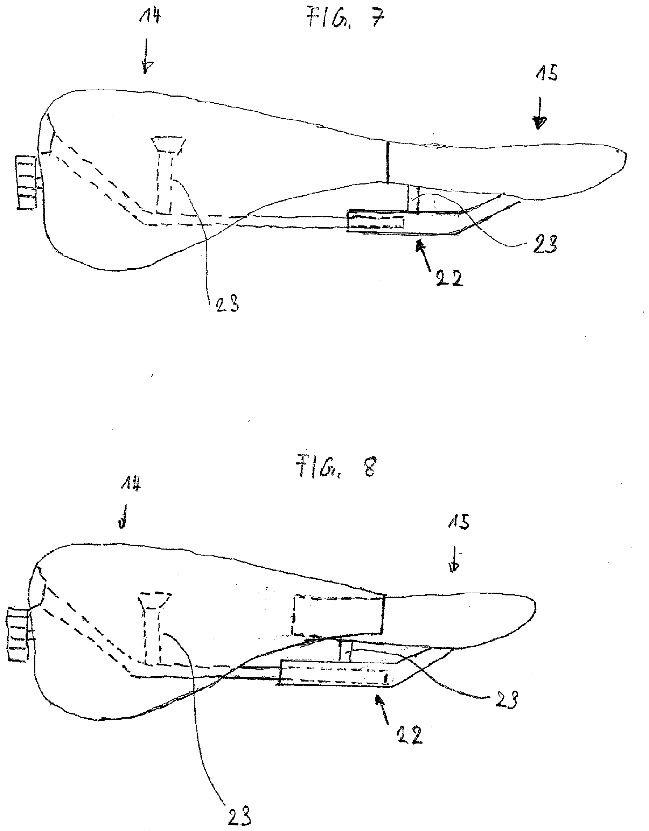

Insbesondere aus Fig. 7 und Fig. 8 ist ersichtlich, dass der Sattelkörper (10) aus Fig. 1 bis Fig. 6 auch aus zwei Teilen bestehen kann, wobei beide Teile wiederum aus einer Sattelschale (11), einer Sattelpolsterung (12) mit Luftkissen (21) bestehen, wobei der eine Teil aus einem Sitzbereich (14) mit Sattelflanken (16) und einem Dreh-Rastmechanismus besteht und der andere Teil, der Sattelnasenbereich (15), der über eine Sattelmontageschiene (18), verbunden mit der Sattelschale (11) des Sattelnasenbereichs und mit Einrast-Längenverstellmechanik (22), in der Länge, insbesondere während der Fahrt, ohne zusätzliches Werkzeug, verkürzt oder verlängert werden kann. Dabei verschiebt sich der Sattelnasenbereich (15) unter die Sattelsitzfläche (14) wenn die Gesamtlänge des Zweiradsattels verkürzt wird. Dabei kann der Sattelnasenbereich (15) und die Sattelsitzfläche (14) alternativ über zusätzliche Montagestützen (23) verfügen.

Die Erfindung wurde zwar anhand ihrer bevorzugten Ausführungsform(en) erläutert, doch es können viele weitere Änderungen und Variationen vorgenommen werden, ohne über den Umfang der vorliegenden Erfindung hinauszugehen. Daher ist es vorgesehen, dass die beilegenden Patentansprüche Änderungen und Variationen abdecken, die im tatsächlichem Umfang der Erfindung enthalten sind.

## Patentansprüche

1. Zweiradsattel, umfassend:
einen Sattelkörper (10), der aus einer Sattelschale (11) mit Sattelflanken (16), einer darüberliegenden Sattelpolsterung (12) die Luftkissen (21) mit Ventil (17) enthält,
einer Satteldecke (13), einer Sattelmontageschiene (18), einem Sitzbereich (14), einem Sattelnasenbereich (15) und einem Dreh-Rastmechanismus (19) mit Verbindung (20) zum Sattelkörper (10) über welchen die Breite und oder Krümmung der Sitzfläche (14) verstellt werden kann.

2. Zweiradsattel nach Anspruch 1, wobei:
der Dreh-Rastmechanismus (19) mit Verbindung zum Sattelkörper (10) auch aus einem Drehhebel mit Rasten- und Einrastfunktion bestehen kann.

3. Zweiradsattel nach Anspruch 1, wobei:
der Sattelkörper (10) aus zwei Teilen besteht, wobei beide Teile wiederum aus einer Sattelschale (11), einer Sattelpolsterung (12) mit Luftkissen (21) bestehen, wobei der eine Teil aus einem Sitzbereich (14) mit Sattelflanken (16) und einem Dreh-Rastmechanismus besteht und der andere Teil, der Sattelnasenbereich (15), der über eine Sattelmontageschiene (18), verbunden mit der Sattelschale (11) des Sattelnasenbereichs und mit Einrast-Längenverstellmechanik (22), in der Länge, insbesondere während der Fahrt verkürzt oder verlängert werden kann.

4. Zweiradsattel nach Anspruch 2, wobei:
der Sattelkörper (10) aus zwei Teilen besteht, wobei beide Teile wiederum aus einer Sattelschale (11), einer Sattelpolsterung (12) mit Luftkissen (21) bestehen, wobei der eine Teil aus einem Sitzbereich (14) mit Sattelflanken (16) und einem Dreh-Rastmechanismus besteht und der andere Teil, der Sattelnasenbereich (15), der über eine Sattelmontageschiene (18), verbunden mit der Sattelschale (11) des Sattelnasenbereichs und mit Einrast-Längenverstellmechanik (22), in der Länge, insbesondere während der Fahrt verkürzt oder verlängert werden kann.
